# EUROPEAN PATENT APPLICATION

(11) **EP 1 810 815 A2**
(43) Date of publication of application: **25.07.2007**
(21) Application number: 06124632.8
(22) Date of filing: 23.11.2006
(51) Int. Cl.: B29C 65/18

(54) **A heat-welding machine for welding a covering film on a perimeter adge of trays destined for product packaging**

(30) Priority: 23.01.2006 IT RE20060005
(71) Applicant: Compac S.r.L., 42024 Castelnovo Sotto (Emilia) (IT)
(72) Inventor: Avanzini, Davide, 42024 Castelnovo Sotto (Reggio Emilia) (IT); Testi, Graziano, 42024 Castelnovo Sotto (Reggio Emilia) (IT)
(74) Representative: Corradini, Corrado

(57) **Abstract**

A heat-welding machine for welding a covering film on trays (100) provided with a perimeter edge (102) which is substantially flat, comprising: a horizontally-lying support frame (2) on which the perimeter edge (102) of a tray (100) rests, the tray (100) being arranged with a concavity thereof facing upwards; a dispensing reel (3) of a band (30) of covering film having a greater width than a width of the tray (100) situated in the support frame (2), an initial tract of an integral part of the band (30) being pulled onto the tray (100); a heated plate (4) for pressing the initial tract of the integral part of the covering film downwards onto the perimeter edge (102) of the tray (100) in order to weld the covering film thereon; means for cutting (40) for acting on the initial tract of the integral part of the band (30) of covering film, in order to separate a portion of the band (30) having a smaller width than the width of the band (30), and leaving a continuous waste (31) formed by two lateral strips (31') which remain attached to the band (30); and a take-up roller (5) of said lateral strips (31') which rotates and advances the initial tract of the integral part of the band (30) of covering film above the tray (100) located in the support frame (2).

## Description

The invention relates to a heat-welding machine for welding a covering film on a perimeter edge of trays destined for product packaging.

More in particular, the present invention relates to a heat-welding machine for welding a covering film on a perimeter edge of trays having various sizes.

The prior art has for some time taught packaging products, especially food products, in trays made of a plastic material, which are then covered and sealed with a covering film which is fixed to the perimeter edge of the tray by heat-welding.

To weld the covering film on the perimeter edge of the tray, the prior art contains heat-welding machines which comprise a support frame for receiving, in resting contact on all four sides thereof, a perimeter edge of a tray, and a heated plate for sealing, located above the support frame and vertically mobile.

The heat-welding machines have mounted upon them dispensing reels of covering film (generally a heat-weldable plastic film), which film has a larger width than the tray and is of indeterminate length; it is manually or automatically pulled over the tray located in the support tray, interposed between the support tray and the overlying heated plate.

The heated plate is brought downwards, in order to press the covering film against the perimeter edge of the tray and weld it to the perimeter edge.

Special means for cutting are provided for shearing the roll of covering film in order to separate the film from the welded tract which covers the tray; the means for cutting being generally brought to act following the downwards movement of the heated plate.

A requirement connected with the use of these machines, especially in large retail outlets, where large quantities of trays having various contents are packed, is that the machine should be able to operate on trays having different formats.

A drawback of known heat-welding machines, in particular automatic heat-welding machines, consists in the fact that in order to satisfy this requirement it is usually necessary to dismount the support frame, the heated plate and the means for cutting, and substitute them with others suited to the specific dimensions of the tray being processed.

These operations are obviously very slow and laborious, and imply a long inactive period for the heat-welding machines; further, they are often too complicated for the average abilities of the operators in retail sales establishment, and therefore require the intervention of specialised technical personnel, who have to be specially called.

A further drawback, connected with manual heat-welding machines, is that a manual operation has to be performed to pull the reel of film above the tray situated in the support frame.

An aim of the present invention is to realise a heat-welding machine having a high level of automation, which is able to operate on trays of various formats and realise, simply and rapidly, the change of dimensions.

These aims are attained by the present invention as it is characterised in the claims.

The invention is based on the fact of using a covering film band which is wider than the with of the tray being operated on, and means for cutting for acting on the band in order to separate a portion of covering film having a smaller width, corresponding to the width of the tray, and to leave a continuous waste part formed by two lateral strips which stay attached to the band of film.

The lateral strips are advanced, pulled by special drawing means, in particular constituted by a motorised take-up roller located downstream of the tray sealing zone, on which the lateral strips are wound, which motorised take-up roller rotates to pull the integral part of the band of film above the tray under process completely automatically, rapidly and with no manual intervention on the part of the operator.

In a preferred aspect of the invention, the trays are supported by a support frame having a mobile side for varying the used size of the support frame according to the size of the tray being processed.

Further, the relative position of the mobile side automatically controls, through a special control system, the advancing of the covering film.

Further characteristics and advantages of the invention will better emerge from the detailed description provided by way of non-limiting example, with the aid of the accompanying figures of the drawings, in which:

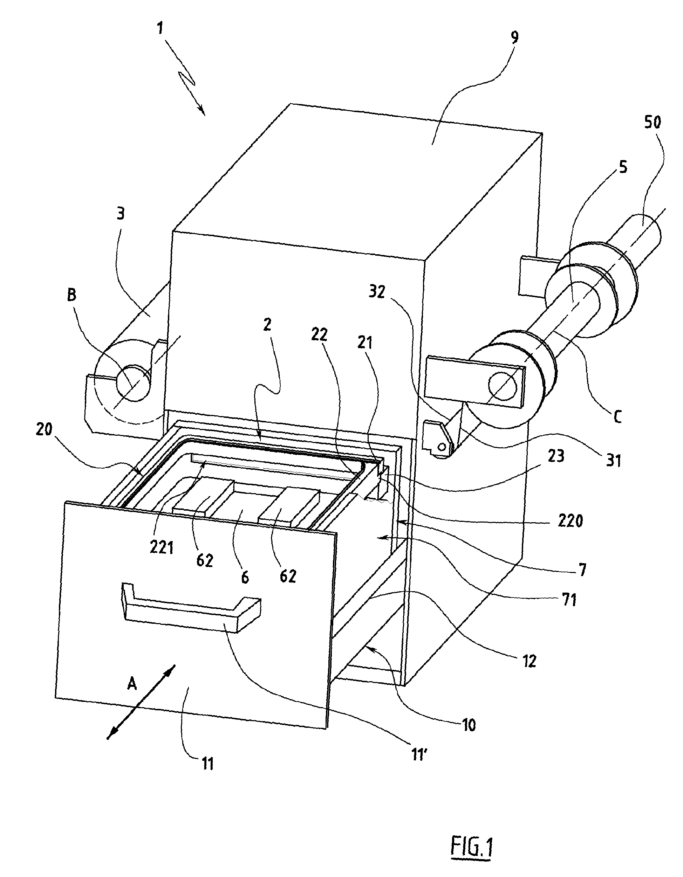

- figure 1 is a three-dimensional overall view of the machine of the invention;
- figures 2A and 2B are a three-dimensional view of a tray, respectively to be sealed and after sealing;
- figure 3 is a plan view of the support drawer 10 in the open drawer position, in which some positions of the mobile transversal side 22 are illustrated in a broken line;
- figures 4A and 4B are the section along line IV-IV indicated in figure 6, shown respectively with the support drawer 10 in the sealing position and in the open-drawer position;
- figure 5 is an enlarged detail of figure 4A;
- figure 6 is a section made along line VI-VI of figure 4A;
- figures 7A and 7B are sections made along line VII-VII of figure 4A, shown respectively before and after the advancement stage of the band 30 of the covering film on the tray 100;
- figures 8A and 8B are an enlarged detail of figure 6 shown in two stages during the descent of the heated plate 4 towards the support frame 2.

The heat-welding machine 1 illustrated in the figures of the drawings is for welding a covering film on trays 100 for containing products of various nature, typically food products.

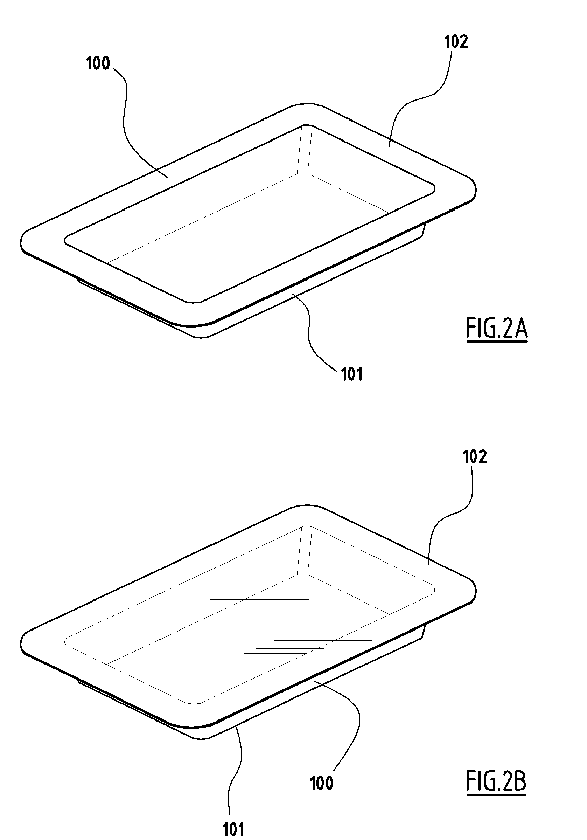

In particular, the trays 100 which are processed are of a type which comprises a concave body 101, generally rectangular, an upper rim of which is provided with a flat perimeter edge 102 which projects laterally externally, and which develops continuously on all four sides (see figure 2A).

The covering film is fixed by a heat-welding operation performed on the perimeter edge 102 of the tray 100, in order superiorly to close the concave body 101 of the tray 100 and seal the products internally thereof (see figure 2B). The trays 100 and the covering film can be made of different materials according to the application they are destined for, as long as they are able to be fixed to one another by heat-welding.

Preferably the trays 100 are made of a plastic material, and the covering film consists of a slim film made of an appropriate heat-weldable plastic material.

Alternatively, trays 100 made of a heat-weldable plastic material can be used, which can contain trays 100 having only the perimeter edge 102 thereof made of heat-weldable plastic, and trays 100 of various materials clad with a film of heat-weldable plastic material.

The heat-welding machine 1 comprises a fixed structure 9 and a support drawer 10 which is horizontally mobile in a horizontal direction A.

The heat-welding machine 1 comprises a support frame 2 with a horizontal lie, for receiving, resting on the four sides thereof, the perimeter edge 102 of a tray 100.

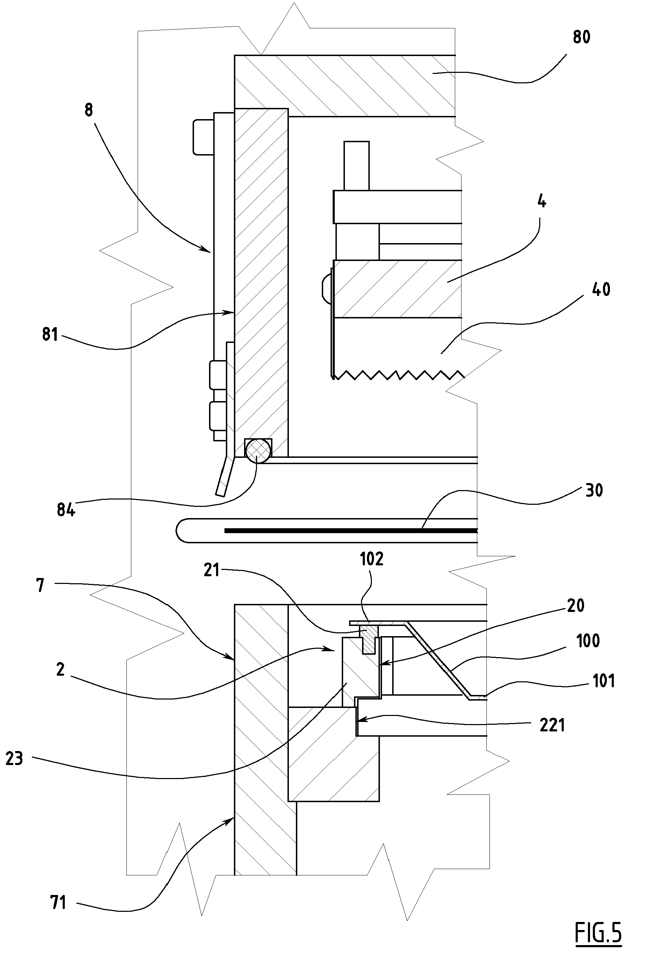

In particular, the support frame 2 comprises a flat rectangular frame 20, which defines a rectangular opening for receiving, in a substantially snug fit the body 101 of the tray 100, and an elastomer gasket 21, applied on the upper face of the flat frame 20, and partially projecting upwards, the external upper edge of which gasket 21 acts as a rest for the perimeter edge 102 of the tray 100 (see also figure 5).

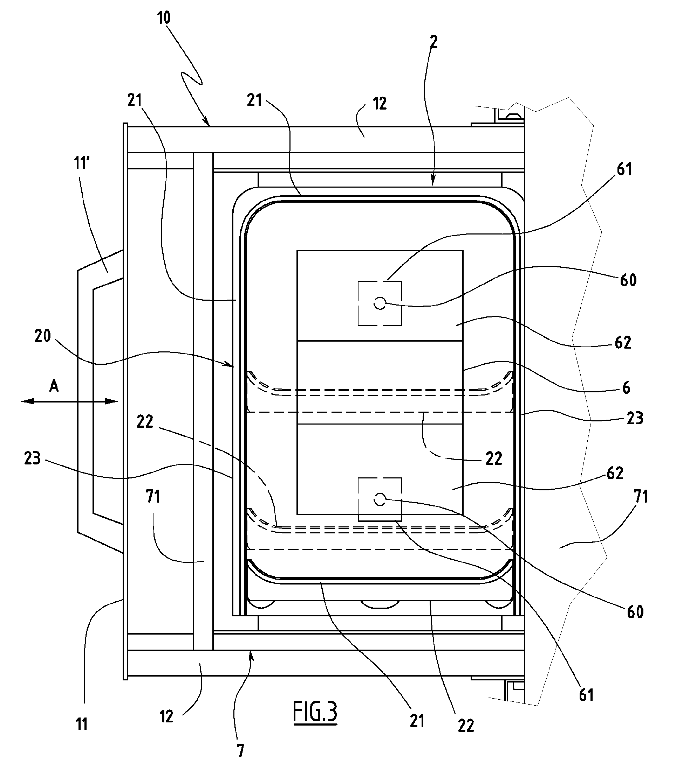

To make the support frame 2 suitable for snugly receiving trays of different sizes, a transversal side 22 of the flat frame 20 is united in a single body with two skates 220 which are slidable along longitudinal channels 221 afforded on the internal surface of the longitudinal sides 23, in order to enable the transversal side 22 to translate longitudinally and therefore vary the useful length of the support frame 2 (see also figure 3).

To cover the tray 100 located in the support frame 2, a dispensing reel 3 of a band 30 of covering film is provided, located laterally and superiorly of the support drawer 10, with a horizontal axis B which is parallel to the sliding direction A of the support drawer 10.

The band 30 of covering film is wider than the tray 100 and is of indeterminate length, and the initial tract of the integral part thereof is drawn above the tray 100 located in the support frame 2.

Above the zone containing the support frame 2 there is a heated plate 4, heated by electrical resistances, which is of a size which corresponds to a size of the biggest tray 100 which can be processed, which heated plate 4 moves vertically in order to press the initial tract of the integral part of the band 30 downwards, against the perimeter edge 102 of the tray 100 resting on the support tray 2, and weld the covering film interposed between the heated plate 4 and the tray 100 onto the perimeter edge 102.

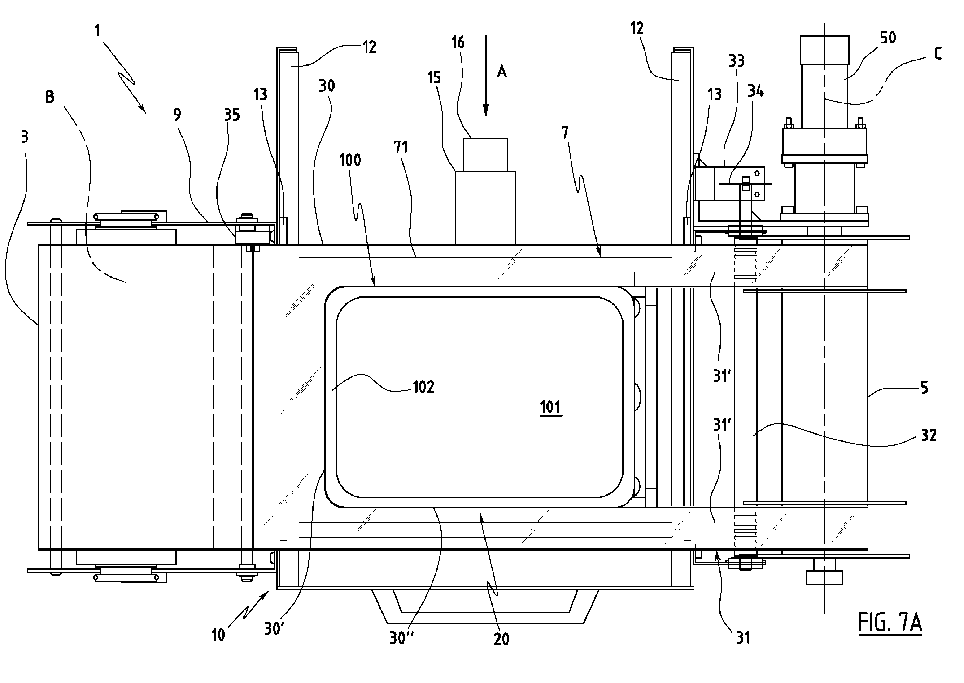

Means for cutting are associated to the heated plate 4 to cut the initial tract of the integral part of the band 30 of the covering film, in order to separate a portion of smaller width than the full width of the band 30 itself, having dimensions which correspond to the size of the tray 100 located in the support frame 2, and in order to leave a continuous waste 31 part which stays attached to the integral part of the band 30 (see figure 7A).

This continuous waste 31 is advanced by means for advancing, for pulling the integral part of the band 30 forward. In the embodiment illustrated in the figures, the means for advancing comprise a take-up roller 5, on which the waste 31 is wound, which take-up roller 5 is located laterally and superiorly of the support drawer 10, on the opposite side with respect to the dispensing reel 3, and having a rotation axis C which is parallel to the rotation axis B of the dispensing reel 3, the take-up roller 5 being rotated by a gear reducer 50 in order to pull, by means of the continuous waste 31, the band 30 of covering film above the tray 100 located in the support frame 2.

In a further embodiment of the invention, the means for advancing comprise a pair of oppositely-rotating rollers which pull and advance the waste 31 in order to advance the integral part of the band 30.

The means for cutting are designed to cut the initial tract of the integral part of the band 30 of covering film in order to separate a transversally intermediate portion thereof (i.e. intermediate in the sense of the width), which leaves a continuous waste 31 comprising two lateral strips 31' which are wound simultaneously onto the take-up roller 5.

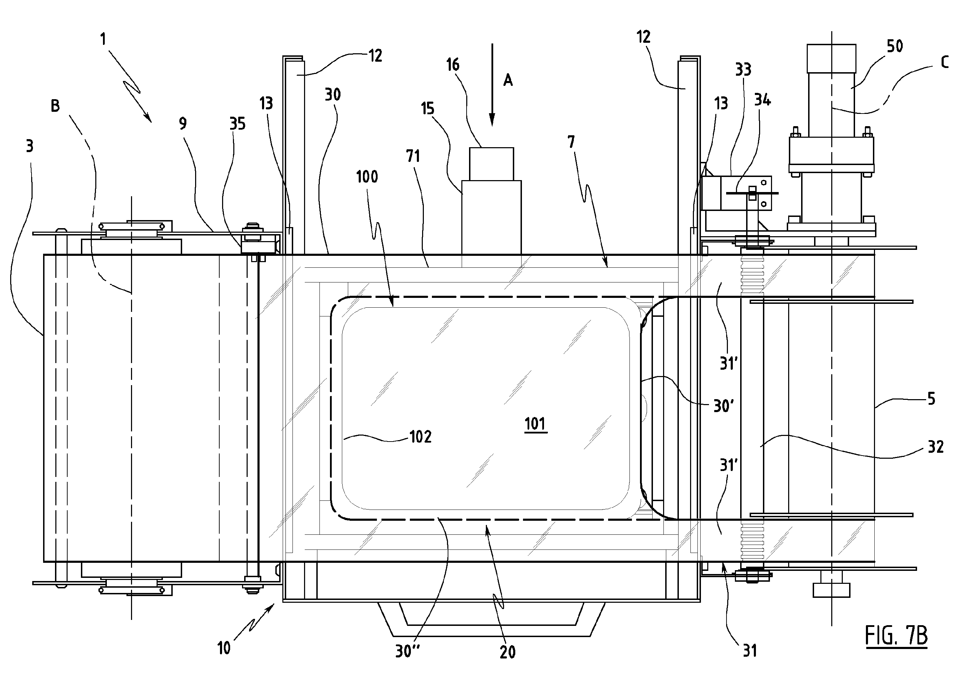

To this end, the take-up roller 5 pulls the integral part of the band 30 of covering film up to positioning the extreme margin 30' of the integral part, i.e. the part connected to the continuous waste 31 at the front edge of the tray 100 (see figure 7B), and the means for cutting realise a cutting line 30" substantially in a C shape (denoted by a broken line in the figure), comprising two longitudinal tracts which develop from the extreme margin 30' of the band 30 along the lateral edges of the tray 100, and a transversal tract which develops along the back edge of the tray 100.

Preferably the means for cutting cut the initial tract of the integral part of the band 30 of covering film following the downwards movement of the heated plate 4 with respect to the support frame 2.

In particular, the means for cutting comprise a blade 40 fixed to the heated plate 4 which develops along a line corresponding to the C-shaped cutting line 30", the cutting line of which is horizontal and located lower than the lower surface of the heated plate 4 (see figure 5).

To position the extreme margin 30' of the integral part of the band 30 of covering film at the front edge of the trays 100 having different dimensions, the relative position of the mobile transversal side 22 of the support frame 2 automatically regulates the quantity the band 30 of covering film advances.

In particular, the heat-welding machine 1 comprises sensors for detecting the relative position of the mobile transversal side 22, and means for processing for translating the information detected into a corresponding and prefixed quantity of band 30 advancement.

Further, in order to advance the band 30 of covering film by the prefixed quantity, regulated according to the format of the trays 100 being processed, the heat-welding machine 1 comprises control systems for detecting the advancement of the band 30, and for retroactively commanding the gear reducer 50 which activates the take-up roller 5.

In particular, the means for controlling comprise a transmission roller 32 which is rotated by the covering film running between the reel 3 and the take-up roller 5, and an electronic counter 33 which interacts with a slim disc 34 coaxially fixed to the transmission roller 32 for counting the revolutions made by the transmission roller 32, thus calculating the advancement actually made by the band 30 of covering film. In the illustrated embodiment, the transmission roller 32 is located downstream of the sealing zone, where it is turned by the continuous waste 31 which winds on the take-up roller 5; however, it could also be located upstream of the sealing zone, and be activated by the band 30 which unwinds from the dispensing reel 3.

The means for controlling further comprise a fork-shaped fixed photocell 35, through which the lateral margin of the covering film runs; the photocell 35 detects and counts the passages of special graphical elements borne on the film itself. In the illustrated embodiment, the photocell 35 is located upstream of the sealing zone, where it interacts with the band 30 of covering film which unwinds from the dispensing reel 3; however, it could also be located downstream of the sealing zone, and could interact with the continuous waste 31 which winds onto the take-up roller 5.

Obviously, the heat-welding machine 1 could be provided with one alone of the above-described detection devices, without losing in terms of efficiency.

In a preferred embodiment of the invention, illustrated in the figures of the drawings, the support frame 2 is borne by the support drawer 10, which is mobile in the sliding direction A between:
- an open-drawer position, in which the support frame 2 is distanced from the heated plate 4, and is superiorly accessible from the outside in order for an already-sealed tray 100 to be extracted, and for a new tray 100 still to be sealed to be inserted, and
- a sealing position, in which the support frame 2 is located vertically below the heated plate 4, to enable welding of the band 30 of covering film onto the tray 100 to be sealed.

In more detail, the support drawer 10 comprises a front panel 11, provided with a handle 11' and two parallel skates 12, oriented in the sliding direction A, which skates are fixed at sides of a horizontally-lying intermediate plate 70, on which the support frame 2 is laid.

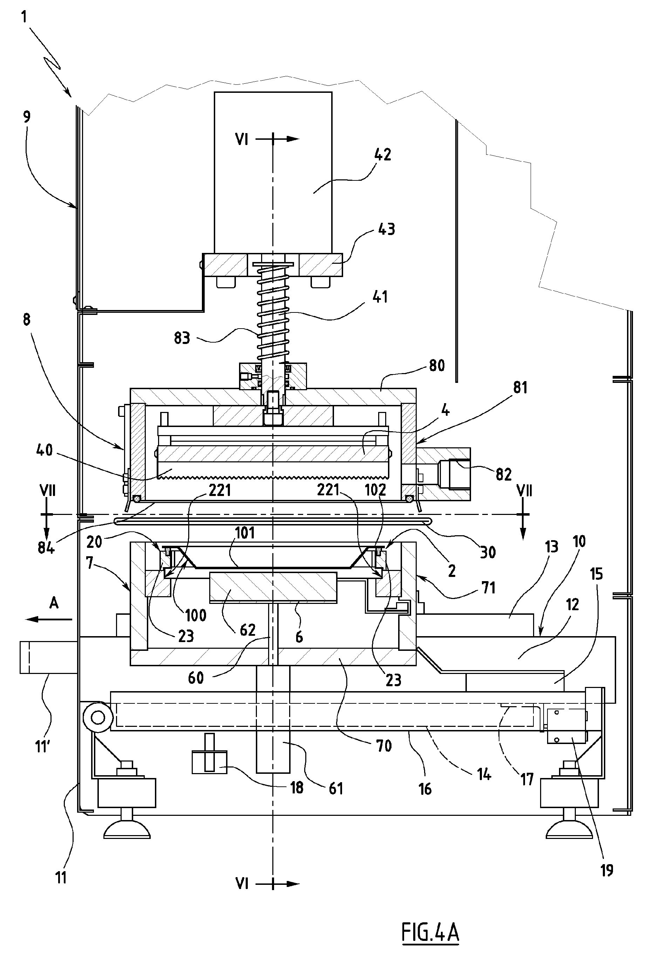

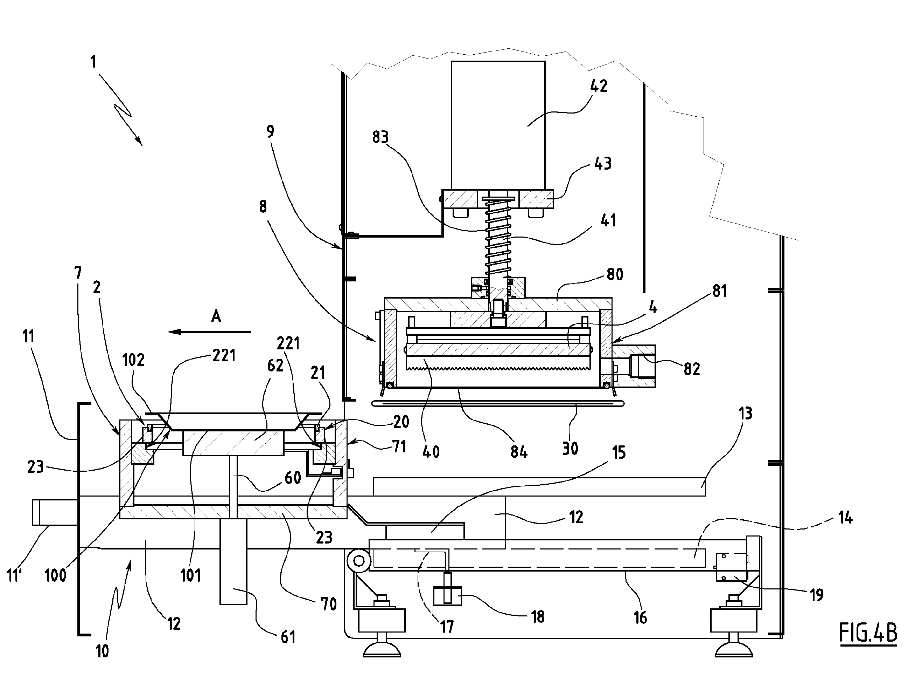

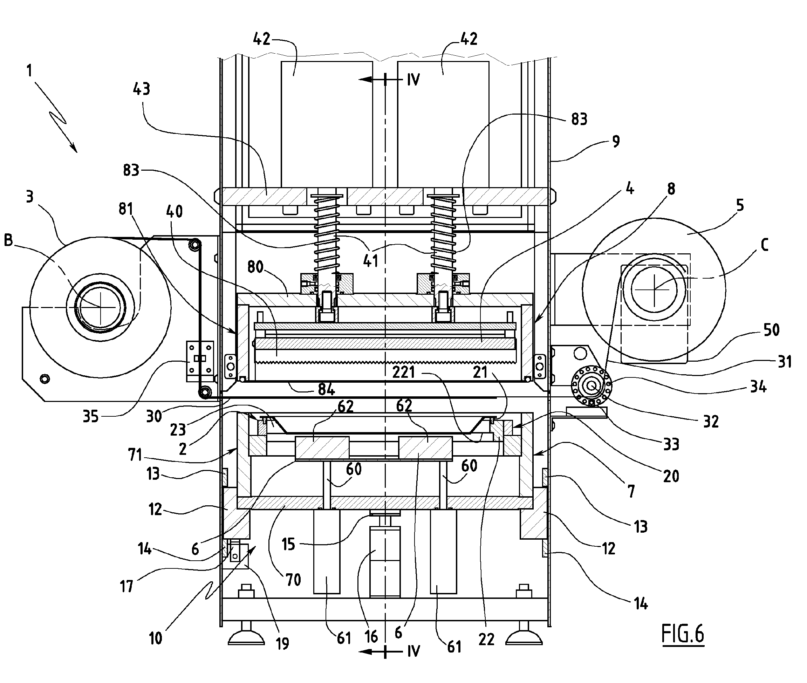

The skates 12 are considerably longer than the intermediate plate 70, with respect to which they project in the posterior part, and are singly closed between two horizontal guides, an upper guide 13 and a lower guide 14, both fixed to the fixed structure 9, which guide the support drawer 10 to translate only in a horizontal A direction (see figures 4A, 4B and 6).

In particular, one of the skates 12 is provided with a lower bracket 17 which projects downwards, which lower bracket 17 interacts with an inductive proximity sensor 18 and with a microswitch 19 fixed to the fixed structure 9. The inductive sensor 18 signals that the support tray 10 has reached the "open drawer" position, while the microswitch 19 signals that the sealing position has been reached (see figures 4A and 4B).

A posterior cursor 15, which is mobile in horizontal A direction, is associated to the support drawer 10, which posterior cursor 15 is activated by a linear actuator 16 located centrally below the intermediate plate 70, which linear actuator 16 pushes the intermediate plate 70 outwards to bring the support drawer 10 into the open drawer position.

Pusher means are also associated to the support drawer 10 to push the bottom of the sealed tray 100 located in the support frame 2 upwards when the support drawer 10 is in the open drawer position, to facilitate the extraction thereof by the operator. In particular, the pusher means comprise a push plate 6 normally located at a lower level than the level of the support frame 2, which push plate 6 is borne by a pair of vertically-oriented pistons 60, each of which belongs to a respective jack 61 fixed to the intermediate plate 70 of the support drawer 10.

Two distinct blocks 62 are fixed above the push plate 6, which blocks 62 are located side-by-side in the direction of the longitudinal development of the support frame 2, and are distanced from one another by a predetermined amount.

The shape, size and reciprocal positions of the blocks 62 is specially calculated, so that when large-format trays 100 are being processed, the mobile transversal side 22 of the flat frame 20 is an advanced position with respect to both blocks 62, while when small-format trays 100 are being processed, the flat frame 20 is in an intermediate position between the blocks 62. This is to prevent the mobile transversal side 22 from interfering with the upwards movement of the push plate 6 and the blocks 62 which raise the tray 100.

In a preferred embodiment of the invention, illustrated in the figures of the drawings, the heated plate 4 is borne and activated by two overlying pistons 41 which are vertically oriented and each of which belongs to a respective jack 42 fixed to a crossbar 43 which is rigidly connected to the fixed structure 9. The pistons 41 are parallel to one another and are arranged in succession in the direction of the longitudinal development of the heated plate 4.

In a preferred embodiment of the invention, illustrated in the figures of the drawings, two opposite bells are associated to the heated plate 4 and the support frame 2, which are respectively a lower bell 7 and an upper bell 8, having concavities facing each other and edges that meet perfectly correspondingly.

The bells 7 and 8 are normally distanced from one another to enable the full part of the band 30 of covering film to be pulled over the tray 100 located in the support frame 2, and are subsequently neared vertically up until they contact one another, thus defining a chamber which contains the heated plate 4 and the support frame 2, with the initial tract of the integral part of the band 30 of covering film interposed there-between.

The chamber defined by the bells 7 and 8 is associated to means for aspirating air from the inside of the chamber, placing the products under vacuum while sealing them internally of the tray 100; further, the chamber can be associated to means for dispensing a special gas mixture, generally having a high nitrogen concentration, for packing the products in a protective atmosphere.

The lower bell 7 comprises a rectangular frame 71 which is fixed above the intermediate plate 70 of the support tray 10, which rectangular frame 71 defines a rectangular chamber which contains the support frame 2. In particular, the flat frame 20 of the support frame 2 is fixed to the rectangular frame 71, an upper border of which is placed at a higher level than the elastomer gasket 21 (see figure 5).

The upper bell 8 comprises an upper plate 80 located above the heated plate 4, and a rectangular chamber 81 fixed below the upper plate 80 defining a rectangular chamber which contains the heated plate 4, and to which mouths 82 are associated, which mouths 82 couple with the conduits of the means for aspirating the air and/or the means for dispensing the mixture of protective gases.
The bells 7 and 8 near one another thanks to a downwards movement of the upper bell 8, which is performed following the downwards displacement of the heated plate 4.

In particular, the upper plate 80 of the upper bell 8 is provided with two holes in which the support pistons 41 of the heated plate 4 are slidably inserted, in order to make possible relative vertical displacements between the heated plate 4 and the upper bell 8, and the upper plate 80 is constantly pushed by two springs 83, interposed between the upper plate 80 and the overlying fixed crossbar 43, towards an extreme lower position with respect to the heated plate 4. In this extreme lower position, the lower edge of the rectangular frame 81, which bears an elastomer gasket 84 to be compressed between the bells 7 and 8 in order to guarantee the hermetic closure thereof, is located in a lower position with respect to the blade 40 borne by the heated plate 4.

In use, the trays 100 containing a product which is to be covered are loaded into the support tray 2 with the concavity of the tray 100 facing upwards, after having pulled the support drawer 10 outwards into the open drawer position, and after having regulated the position of the mobile transversal side 22 of the flat frame 20 according to the format of the tray 100 being processed.

In particular, trays 100 having a same width can be loaded into the support frame 2, which width is equal to the distance between the longitudinal sides 23 of the flat frame 20, and a variable length between a maximum value and a minimum value, depending on the range of movement of the mobile transversal side 22.

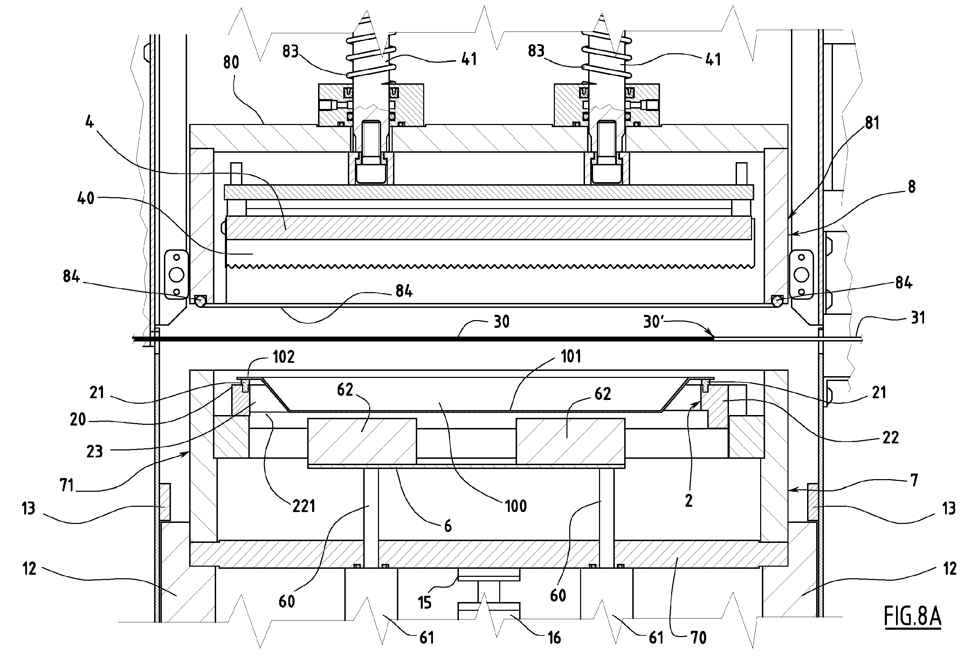

After having loaded the tray 100, the support drawer 10 is pushed backwards, into the sealing position, in which the support frame 2 is positioned below the heated plate 4, which is initially in a raised position (see figure 8A).

At this point, the gear reducer 50 is automatically commanded to rotate the take-up roller 5 in order to wind the lateral strips 31' left by the previous sealing operations (denoted by the broken line), and draw the initial tract of the integral part of the band 30 of covering film (denoted with a continuous line) above the tray 100.

As previously mentioned, the advancement of the integral part of the band 30 of covering film continues up until when the extreme margin 30', i.e. the margin to which the lateral strips 31' are connected, is positioned at the front edge of the tray 100 being processed.

In particular, the advancement is regulated by the relative position of the mobile transversal side 22 of the support frame 2, and actuated by the take-up roller 5 by means of the above-described system.

At this point the jacks 42 are automatically commanded, which produce a simultaneous descent of the heated plate 4, the cutting blade 40 and the upper bell 8, which upper bell 8 is pushed by the springs 83 into the extreme lower position with respect to the heated plate 4.

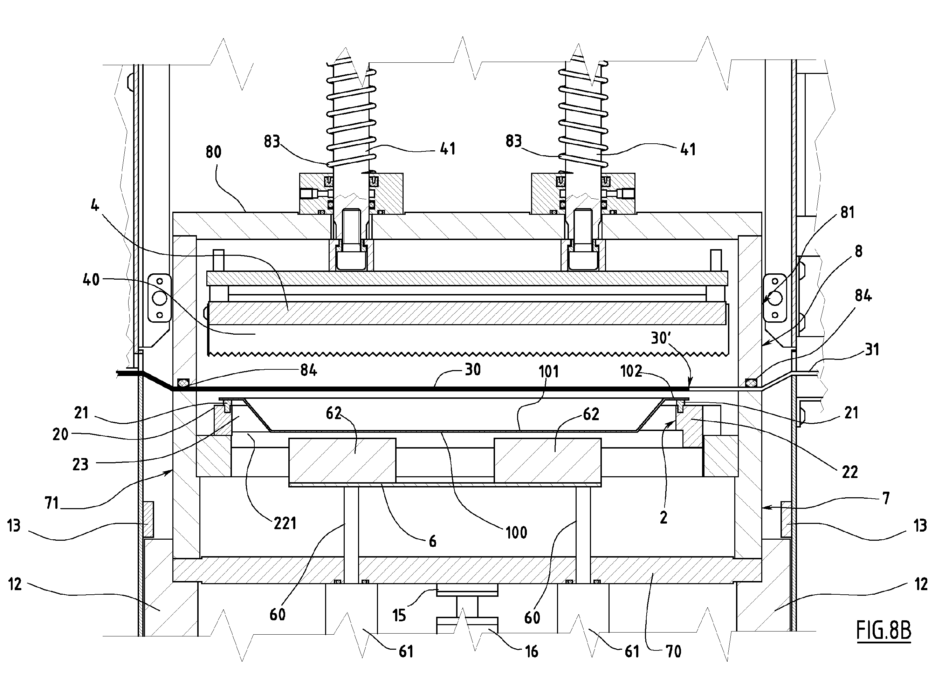

During the descent thereof, the upper bell 8 contacts the lower bell 7 and thus defines the chamber which, closed hermetically by the elastomer gasket 84 interposed there-between, closes the tray 100 positioned in the support frame 2 and the heated plate 4; a vacuum can then be created and/or a special mixture of gas can be introduced inside the chamber (see figure 8B).

During this stage, the initial tract of the integral part of the band 30 of covering film is locked between the bells 7 and 8, while the heated plate 4 and the cutting blade 40 are still distanced from the band 30 of covering film.

With the bells 7 and 8 in reciprocal contact, the heated plate 4 is free to move further downwards, thanks to the sliding coupling between the support pistons 41 and the upper bell 8.

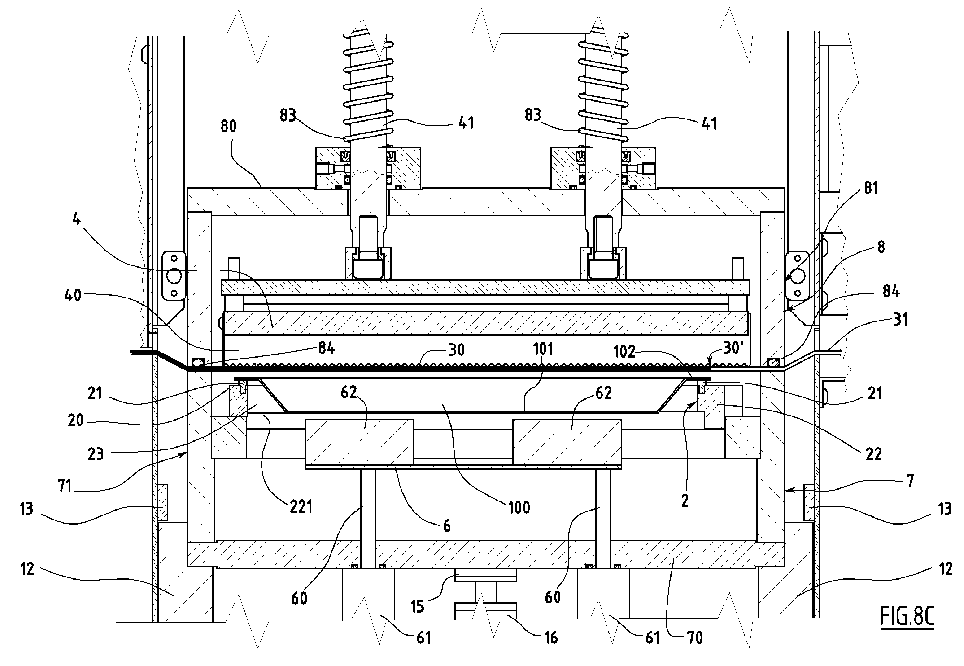

Thus, as the heated plate 4 continues in its downward run, the cutting blade 40 reaches and contacts the initial tract of the integral part of the band 30 of covering film, separating a portion thereof of a size which corresponds to the size of the tray 100 (see figure 8C).

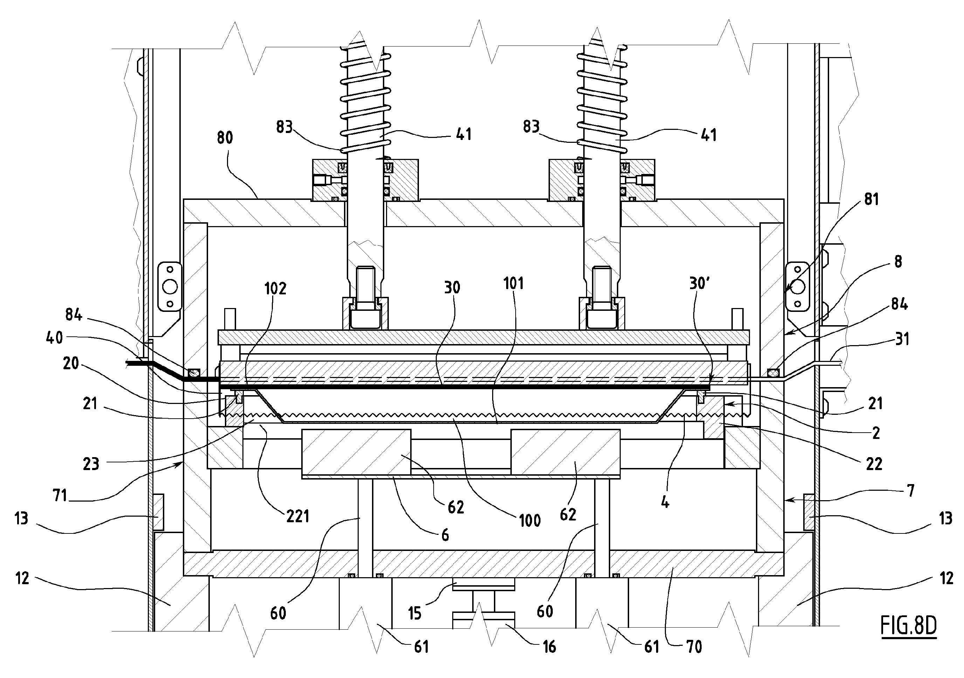

Following the cut, the further descent of the heated plate 4 presses the portion of plastic film against the perimeter edge 102 of the tray 100, which is resting on the gasket 21 of the support frame 2, so as to realise the reciprocal welding thereof (see figure 8D). In particular, this further descent of the heated plate 4, after the cut, is done rather quickly, in order not to place at risk the correct positioning of the separated portion of the covering film with respect to the underlying tray 100.

Alternatively the blade 40 might not be fixed rigidly to the plate 4, and could instead come into contact with the film, without however cutting it, just before the plate 4 contacts it, so as to stretch it on the tray before it is welded by the plate 4. The blade 40 would then perform the cut immediately after the welding operation, thanks to the further descent of the blade 40 with respect to the plate 4.

After sealing, while the portion of separated band 30 is welded on the tray 100, the lateral strips 31' left by the cut stay attached to the band 30 of covering film which unwinds from the dispensing reel 3, connecting it to the take-up roller 5.

At this point, the jacks 42 are automatically commanded to raise the heated plate 4, and with it the cutting blade 40 and the upper bell 8; then, the cursor 15 pushes the support drawer 10 outwards, towards the open drawer position, where the push plate 6, moved upwards by the relative jacks 61, extracts the sealed tray 100 from the support frame 2. During this stage, the user can remove the sealed tray 100 and arrange a new tray 100 on the support frame 2, before newly pushing the drawer into the sealing position, to perform the sealing operation on the new tray 100.

## Claims

1. A heat-welding machine for welding a covering film on trays (100) provided with a substantially-flat perimeter edge (102), comprising:
- a horizontally-lying support frame (2) on which the perimeter edge (102) of a tray (100) rests, the tray (100) being arranged with a concavity thereof facing upwards;
- a dispensing reel (3) of a band (30) of covering film having a greater width than a width of the tray (100) situated in the support frame (2), an initial tract of an integral part of the band (30) being pulled over the tray (100), and
- a heated plate (4) for pressing the initial tract of the integral part of the covering film downwards onto the perimeter edge (102) of the tray (100) in order to weld the covering film thereon,
**characterised in that** it comprises:
- means for cutting (40) for acting on the initial tract of the integral part of the band (30) of covering film, in order to separate a transversally-intermediate portion of the band (30) having a smaller width than a full width of the band (30), leaving a continuous waste (31) formed by two lateral strips (31') which remain attached to the band (30), and
- means (5) for advancing the lateral strips (31'), for pulling the initial tract of the integral part of the band (30) of covering film above the tray (100) located in the support frame (2).

2. The machine of claim 1, **characterised in that** the initial tract of the integral part of the band (30) of covering film is pulled over the tray (100) located in the support frame (2) up until an extreme margin of the band (30) is positioned at a front edge of the tray (100), and the means for cutting (40) cut the initial tract of the integral part of the band (30) of covering film in a substantially C-shaped cutting line (30"), comprising two longitudinal tracts which develop along the lateral edges of the tray (100), and a transversal tract which develops along a posterior edge of the tray (100).

3. The machine of claim 1, **characterised in that** the means (5) for advancing the lateral strips (31') comprise a take-up roller for receiving the lateral strips (31').

4. The machine of claim 1, **characterised in that** the means for cutting (40) act on the integral part of the band (30) of covering film, following the downwards movement of the heated plate (4) with respect to the tray (100) situated resting on the support frame (2).

5. The machine of claim 4, **characterised in that** the means for cutting comprise a blade (40) borne by the heated plate (4), a cutting line of which blade (40) is horizontal and is located lower than the heated plate (4), the blade (40) developing in a progression which corresponds to the cutting line (30") to be made.

6. The machine of claim 1, **characterised in that** the support frame (2) has a constant width and an adjustable length, in order to be able to house trays (100) having different formats with a same width and a variable length.

7. The machine of claim 6, **characterised in that** the support frame (2) comprises a flat frame (20) defining a rectangular opening for receiving a body (101) of a tray (100), which flat frame (20) comprises a transversal side (22) which is mobile in a longitudinal direction in order to vary a useful length of the support frame (2).

8. The machine of claim 7, **characterised in that** a relative position of the mobile transversal side (22) regulates a quantity by which the band (30) of covering film advances in order to bring the initial tract of the integral part thereof above the tray (100).

9. The machine of claim 1, **characterised in that** it comprises means for controlling (32, 33, 34, 35) for advancing the band (30) of covering film by a prefixed quantity, corresponding to a length of the tray (100) situated in the support frame (2).

10. The machine of claim 9, **characterised in that** the means for controlling comprise a transmission roller (32) which is rotated by the covering film running between the dispensing reel (3) and the take-up roller (5), and a device (33, 34) for counting revolutions made by the transmission roller (32).

11. The machine of claim 9, **characterised in that** the means for controlling comprise a photocell (35) which is stationary with respect to the covering film running between the dispensing reel (3) and the take-up roller (5), which photocell (35) detects passage of graphic elements located on the covering film.

12. The machine of claim 1, **characterised in that** the support frame (2) is solidly associated to a support drawer (10) which is horizontally mobile between a sealing position, in which it places the support frame (2) beneath the heated plate (4), and an open-drawer position, in which the support frame (2) is made superiorly accessible in order for a tray (100) to be sealed to be loaded and a sealed tray (100) to be unloaded.

13. The machine of claim 12, **characterised in that** the support tray (10) comprises means for pushing (6, 62) for pushing a bottom of the tray (100) located in the support frame (2) upwards, in order to facilitate unloading thereof when the support drawer (10) is in the open-drawer position.

14. The machine of claim 1, **characterised in that** it comprises two oppositely-located bells, of which one is a lower bell (7) and another an upper bell (8), which bells can be pressed one against the other in a vertical direction after the initial tract of the integral part of the band (30) of covering film has been pulled above the tray (100) situated in the support frame (2), in order to define a chamber which closes the tray (100) and the heated plate (4), to which chamber are associated means for aspirating air from an inside thereof.

15. The machine of claim 14, **characterised in that** the upper bell (8) can be neared to the lower bell (7) following the downwards movement of the heated plate (4), to which heated plate (4) the upper bell (8) is associated with possibility of relative displacements in a vertical direction, so that when the bells (7, 8) are in reciprocal contact, the heated plate (4) can be displaced further downwards in order to press the initial tract of the integral part of the band (30) of covering film against the perimeter edge (102) of the tray (100).
